# EUROPÄISCHE PATENTSCHRIFT

(11) **EP 3 186 703 B1**
(45) Veröffentlichungstag und Bekanntmachung des Hinweises auf die Patenterteilung: **06.10.2021**
(21) Anmeldenummer: 15754169.9
(22) Anmeldetag: 19.08.2015
(51) Int. Cl.: G06F 3/14

(54) **SCHALTUNGSANORDNUNG ZUM BETREIBEN VON MEHR ALS ZWEI VISUELLEN AUSGABEEINHEITEN, HAUSHALTSGERÄT UND VERFAHREN HIERFÜR**
CIRCUIT FOR DRIVING MORE THAN TWO DISPLAYS, DOMESTIC APPLIANCE AND METHOD THEREOF
CIRCUIT POUR CONTRÔLER PLUS DE DEUX AFFICHAGES, APPAREIL D'UTILISATION ET SON PROCÉDÉ

(30) Priorität: 29.08.2014 DE 102014217286
(43) Veröffentlichungstag der Anmeldung: 05.07.2017
(73) Patentinhaber: BSH Hausgeräte GmbH, 81739 München (DE)
(72) Erfinder: PROSKE, Matthias, 93059 Regensburg (DE); STENZEL, Kay, 93197 Zeitlarn (DE); GABLER, Michael, 93047 Regensburg (DE)
(86) Internationale Anmeldenummer: PCT/EP2015/069003
(87) Internationale Veröffentlichungsnummer: WO 2016/030240

(56) Entgegenhaltungen:
- US-A- 5 285 192
- "Designing with the Avago Technologies HDSP-211x Smart Display Family, Application Note 1033", , 14. Juni 2006 (2006-06-14), XP055222380, Gefunden im Internet: URL:http://www.datasheetarchive.com/dl/Dat asheet-080/DASF0016740.pdf [gefunden am 2015-10-20]
- Osram: "IPD2131, IPD2132, IPD2133 0.200'' 8-Character 5x7 Dot Matrix X-Y Stackable Alphanumeric Programmable Display(TM)", , 4 April 2006 (2006-04-04), XP055572636, Retrieved from the Internet: URL:https://www.arrow.de/products/ipd2132/ osram-opto-semiconductors [retrieved on 2019-03-21]

## Beschreibung

Die vorliegende Erfindung betrifft ein Haushaltsgerät mit einer Schaltungsanordnung zum Betreiben einer mehr als zwei visuelle Ausgabeeinheiten aufweisenden Ausgabeeinrichtung, wobei die Ausgabeeinheiten jeweils eine Speichereinheit für eine vollständige, anzuzeigende visuelle Ausgabe und eine digitale Ausgabeeinheitsschnittstelle aufweisen, wobei die Schaltungsanordnung eine bildverarbeitende Rechnereinheit mit einer digitalen Rechnerschnittstelle aufweist, wobei sowohl die Rechnerschnittstelle als auch die Ausgabeeinheitsschnittsellen jeweils parallele Datenanschlüsse und einen separaten Ausgabeeinheitssteueranschluss umfassen, wobei die Datenanschlüsse der Ausgabeeinheitsschnittstellen jeweils parallel an den Datenanschlüssen der Rechnerschnittstelle angeschlossen sind. Darüber hinaus betrifft die Erfindung ein Haushaltsgerät mit einem mittels einer Tür verschließbaren Aufnahmeraum für einen Haushaltsgegenstand sowie einer Steuereinrichtung zum Betreiben des Haushaltsgeräts während eines bestimmungsgemäßen Gebrauchs und zum Betreiben einer mehr als zwei visuelle Ausgabeeinheiten aufweisenden Ausgabeeinrichtung. Schließlich betrifft die Erfindung auch ein Verfahren zum Betreiben einer mehr als zwei visuelle Ausgabeeinheiten aufweisenden Ausgabeeinrichtung eines Haushaltsgeräts, wobei die Ausgabeeinheiten jeweils eine vollständige, anzuzeigende visuelle Ausgabe aufgrund von Daten einer Speichereinheit der Ausgabeeinheiten ausgeben, wobei die Daten für die Ausgabe von einer bildverarbeitenden Rechnereinheit über eine digitale Rechnerschnittstelle und über eine jeweilige digitale Ausgabeeinheitsschnittstelle bereitgestellt werden, wobei die Daten parallel für die Ausgabeeinheiten über jeweilige Datenanschlüsse und einen separaten Ausgabeeinheitssteueranschluss bereitgestellt werden.

Schaltungsanordnungen der gattungsgemäßen Art sowie auch Haushaltsgeräte und Verfahren zu deren Betrieb sind im Stand der Technik dem Grunde nach bekannt, so dass es eines gesonderten druckschriftlichen Nachweises hierfür nicht bedarf. Ausgabeeinrichtungen dienen bei Haushaltsgeräten dazu, aktuelle Betriebszustände des Haushaltsgeräts anzuzeigen und gegebenenfalls durch einen Nutzer vorgegebene Einstellungen am Haushaltsgerät anzuzeigen. Bei Haushaltsgeräten sind üblicherweise hohe Anforderungen hinsichtlich der Kosten und flexiblen Ausgestaltung von Anzeigeeinrichtungen zu beachten. Einerseits dürfen Anzeigeeinrichtungen nur einen recht geringen Kostenaufwand verursachen, andererseits müssen sie in beengte Raumverhältnisse des Haushaltsgeräts eingepasst werden. Dies erfordert für jedes Haushaltsgerät häufig und kostenintensive individuelle konstruktionen für Anzeigeeinrichtungen.

Aus dem Datenblatt "IPD2131, IPD2132, IPD2133 0.200" 8-Character 5x7 Dot Matrix X-Y Stackable Alphanumeric Programmable Display™" der OSRAM Opto Semiconductors GmbH sind kaskadierbare alphanumerische LED 5x7 Punktmatrixanzeigen bekannt, die einen eigenen Speicher beinhalten und über eine bidirektionale parallele Mikroprozessorschnittstelle programmiert werden. Ferner weisen sie einen Chip Enable Eingang zur Auswahl der jeweiligen Anzeige auf.

Die Erfindung hat es sich zur Aufgabe gemacht, die Flexibilität hinsichtlich des Einsatzes von Anzeigeeinrichtungen zu verbessern.

Diese Aufgabe wird durch ein Haushaltsgerät gemäß Patentanspruch 1 gelöst.

Die Schaltungsanordnungsseitig des erfindungsgemäßen Haushaltsgeräts dient insbesondere zum Betreiben einer mehr als zwei visuelle Ausgabeeinheiten aufweisenden Ausgabeeinrichtung. Die Ausgabeeinheiten weisen jeweils eine eigene Speichereinheit für eine vollständige, anzuzeigende visuelle Ausgabe und eine digitale Ausgabeeinheitsschnittstelle auf.

Die Schaltungsanordnung der Erfindung weist eine bildverarbeitende Rechnereinheit mit einer digitalen Rechnerschnittstelle auf. Sowohl die Rechnerschnittstelle als auch die Ausgabeeinheitsschnittsellen umfassen jeweils parallele Datenanschlüsse und einen separaten Ausgabeeinheitssteueranschluss. Die Datenanschlüsse der Ausgabeeinheitsschnittstellen sind jeweils parallel an den Datenanschlüssen der Rechnerschnittstelle angeschlossen. Die Schaltungsanordnung weist ferner eine Selektionseinheit auf, die einen Selektionsanschluss aufweist, der an die Rechnereinheit angeschlossen ist. An die Selektionseinheit sind die Ausgabeeinheitssteueranschlüsse sowohl der Rechnerschnittstelle als auch der Ausgabeeinheitsschnittstellen angeschlossen. Die Selektionseinheit ist darüber hinaus eingerichtet, in Abhängigkeit eines von der Rechnereinheit am Selektionsanschluss bereitgestellten Selektionssignals selektiv eine kommunikationstechnische Verbindung zwischen dem Ausgabeeinheitssteueranschluss der Rechnerschnittstelle und dem Ausgabeeinheitssteueranschluss einer der dem jeweiligen Selektionssignal zugeordneten Ausgabeeinheitsschnittstelle herzustellen.

Die Erfindung macht es sich zunutze, dass eine einfache Ausgabeeinheit der Ausgabeeinrichtung eine Speichereinheit umfasst, die sämtliche Daten für eine jeweils von ihr aktuell auszugebende Ausgabe enthält. Vorzugsweise umfasst die Speichereinheit genau die Daten, die für eine einzige Ausgabe, beispielsweise ein Bild, ein Text, Kombinationen hiervon oder dergleichen, erforderlich sind. Solange der Speichereinhalt der Speichereinheit unverändert bleibt, wird dementsprechend eine unveränderte Ausgabe anhand der in der Speichereinheit gespeicherten Daten mittels der Ausgabeeinheit vorgenommen.

Hierdurch ist es möglich, mehr als zwei Ausgabeeinheiten zu einer Ausgabeeinrichtung zusammenzuschalten, wobei die Ausgabeeinheitsschnittstellen bezüglich ihrer Datenleitungen parallelgeschaltet sein können. Dadurch ist es möglich, die für die jeweilige Ausgabe erforderlichen Daten gemeinsam über die Datenleitungen an sämtliche Ausgabeeinheiten zu übermitteln. Die zur Ausgabeeinrichtung, beispielsweise modular, zusammengestellten Ausgabeeinheiten können vorzugsweise identisch ausgebildet sein, so dass sie kostengünstig hergestellt werden können. Die Ausgabeeinrichtung kann beispielsweise eine Anzeigeeinrichtung, eine Druckeinrichtung, Kombinationen hiervon oder dergleichen sein. Entsprechend kann die Ausgabeeinheit eine Anzeigeinheit, eine Druckeinheit Kombinationen hiervon oder dergleichen sein.

Vorzugsweise ist vorgesehen, dass die Ausgabeeinheiten nicht die jeweils identischen Ausgaben ausgeben, sondern jeweils ihnen zugeordnete Ausgaben. Hierdurch können die Ausgabeeinheiten unterschiedliche Inhalte als Ausgaben aufgrund der individuellen, entsprechenden Daten ausgeben. Dadurch ist es möglich, mehrere Ausgabeeinheiten zu einer Ausgabeeinrichtung zusammenzuschalten, die eine Ausgabe von Inhalten ermöglicht, die auf einer einzelnen Ausgabeeinheit nicht dargestellt werden könnten. Dabei erlaubt es die Erfindung, die Ausgabeeinrichtung mit einem modularen Aufbau bereitzustellen, so dass auf einfache Weise mit einer geringen Anzahl an vorgefertigten Ausgabeeinheiten eine Ausgabeeinrichtung der gewünschten Funktion und Geometrie erstellt werden kann.

Dabei erlaubt es die Erfindung zugleich, die zu einer Ausgabeeinrichtung zusammengefassten Ausgabeeinheiten als eine einzige Ausgabeeinrichtung zu betreiben, so dass eine gemeinsame Ausgabe beziehungsweise Darstellung, beispielsweise eines Bildes, eines Textes oder dergleichen, erreicht werden kann. Zu diesem Zweck sieht die Erfindung vor, dass ein für jede Ausgabeeinheit vorgesehenes Ausgabeeinheitssteuersignal über einen Ausgabeeinheitssteueranschluss selektiv an die jeweilige Ausgabeeinheit ausgegeben wird. Vorzugsweise wird dieses Signal dann ausgegeben, wenn über die gemeinsamen Datenleitungen die erforderlichen Daten für die jeweils ausgewählte Ausgabeeinheit für eine Übernahme in die Speichereinheit der entsprechenden Ausgabeeinheit übermittelt worden sind und dort bereitstehen. Mit dem Ausgabeeinheitssteuersignal kann dann die Übernahme der Daten in die Speichereinheit zum Zwecke des Ausgebens durch die entsprechende Ausgabeeinheit gesteuert werden. Eine Ausgabeeinheit, die zu erhaltenen Daten kein entsprechendes Ausgabeeinheitssteuersignal erhält, übernimmt diese Daten nicht und überschreibt sie stattdessen mit den darauffolgend empfangenen Daten. Dieser Vorgang wiederholt sich, bis über den zugehörigen Ausgabeeinheitssteueranschluss das entsprechende Ausgabeeinheitssteuersignal zur Übernahme der empfangenen Daten in die Speichereinheit erfolgt. Erst dann werden die über die Datenleitungen empfangenen Signale in die Speichereinheit übernommen und eine entsprechende Ausgabe durch die Ausgabeeinheit veranlasst.

Die Datenanschlüsse der Ausgabeeinheitsschnittstellen sind entsprechend parallelgeschaltet an die Datenanschlüsse der Rechnerschnittstelle der Rechnereinheit angeschlossen. Vorzugsweise sind zu diesem Zweck jeweils die jeweiligen Datenanschlüsse verbindende Datenleitungen vorgesehen. Die Rechnereinheit ermittelt Daten für den jeweiligen Anzeigeeinheiten zugeordnete Datensätze, die über die Datenleitungen an alle Ausgabeeinheiten gleichzeitig übermittelt werden. Zugleich liefert die Rechnereinheit ein Selektionssignal, welches der jeweiligen Anzeigeeinheit individuell zugeordnet ist. Mittels dieses Signals ist es dann möglich, den Anzeigeeinheitssteueranschluss zu betätigen, um die aktuell über die Datenleitungen übertragenen Daten des jeweiligen Datensatzes in die jeweilige Speichereinheit der zugehörigen Ausgabeeinheit zu übernehmen.

Um dies zu bewerkstelligen, umfasst die Schaltungsanordnung die Selektionseinheit, die vorzugsweise als Demultiplexer ausgebildet sein kann. Die Selektionseinheit weist einen Selektionsanschluss auf, der an die Rechnereinheit angeschlossen ist, und dem die Rechnereinheit das Selektionssignal bereitstellt. Ein weiterer Anschluss der Selektionseinheit ist an den Ausgabeeinheitssteueranschluss der Rechnerschnittstelle angeschlossen. Der Ausgabeeinheitssteueranschluss der Rechnerschnittstelle liefert ein Signal, aufgrund dessen eine Ausgabeeinheit die empfangenen Daten in die Speichereinheit übernimmt und ausgibt. Dieses Signal kann beispielsweise ein Chip-Select-(CS)-Signal sein oder dergleichen. Die Selektionseinheit ist weiterhin an Ausgabeeinheitssteueranschlüsse sämtlicher angeschlossenen Ausgabeeinheiten angeschlossen. Aufgrund des von der Rechnereinheit an die Selektionseinheit übermittelten Selektionssignals wird eine kommunikationstechnische Verbindung selektiv zu der dem Selektionssignal zugeordneten Anzeigeeinheit hergestellt. Das entsprechende Ausgabeeinheitssteuersignal der Rechnerschnittstelle wird demnach selektiv an die jeweils dem Selektionssignal zugeordnete Anzeigeeinheit übermittelt, die die jeweils zuletzt übermittelten Daten des Datensatzes zur Ausgabe bringen soll. Dadurch wird erreicht, dass die zu einem Datensatz zusammengefassten Daten jeweils nur von einer einzigen, vorgegebenen Ausgabeeinheit ausgegeben werden.

Damit eine zusammenhängende gemeinsame Ausgabe für die zu einer Ausgabeeinrichtung zusammengefassten Ausgabeeinheiten realisiert werden kann, ist die Rechnereinheit dazu eingerichtet, Daten, insbesondere Datensätze für Einzelausgaben für die jeweiligen Ausgabeeinheiten aus einer für sämtliche Ausgabeeinheiten gemeinsamen visuellen Ausgabe zu ermitteln und die jeweiligen Daten an die entsprechend zugeordneten Ausgabeeinheiten zu übermitteln. Die Gesamtausgabe wird beispielsweise in entsprechende Datensätze für Einzelausgaben der jeweiligen Ausgabeeinheiten separiert, wobei zugleich dem jeweiligen Datensatz ein entsprechendes Selektionssignal zugeordnet wird, so dass die Ausgabe durch die gewünschte Ausgabeeinheit sichergestellt werden kann.

Die Ausgabeeinheit ist vorzugsweise für eine graphische und/oder alphanumerische visuelle Ausgabe ausgebildet. Die Erfindung beschränkt sich also nicht auf die Wiedergabe von alphanumerischen Zeichen, sondern sie kann auch zur Wiedergabe graphischer Elemente beziehungsweise Inhalte dienen, wobei ein Element nicht von einer einzigen Ausgabeeinheit auszugeben sein braucht, sondern die Ausgabe eines Elements auch über zwei oder mehrere Ausgabeeinheiten verteilt erfolgen kann. Beispielsweise kann dies vorgesehen sein, wenn ein darzustellender Text die Abmessungen der Ausgabeeinheit bei vorgegebener Schriftgröße übersteigt und ergänzend Darstellungsfläche einer benachbarten Ausgabeeinheit benötigt wird, um den Text vollständig darstellen zu können. Das gleiche gilt dem Grunde nach für graphische Darstellungen wie Bilder, Steuermenüs oder dergleichen.

Obwohl sich die Erfindung bei Anzeigeeinheiten beliebiger Art, wie zum Beispiel Bildröhren, Projektoren, Kombinationen hiervon und dergleichen einsetzen lässt, erweist es sich als besonders vorteilhaft, die Erfindung bei Ausgabeeinheiten einzusetzen, die durch ein TFT-Display gebildet sind beziehungsweise ein solches TFT-Display aufweisen. Derartige Ausgabeeinheiten lassen sich sehr kostengünstig in großer Stückzahl herstellen und können mit der Erfindung in quasi beliebiger Anzahl in gewünschter Weise miteinander kombiniert werden, um eine Anzeigeeinrichtung auszubilden. Dabei kann vorgesehen sein, dass die Ausgabeeinheit beispielsweise mit einer quadratischen oder auch mit einer rechteckigen Grundfläche versehen ist, auf der eine entsprechende Ausgabe dargestellt werden kann. Derartige Anzeigeeinheiten können vorzugsweise unmittelbar benachbart zueinander angeordnet sein, um eine gewünschte Ausgabefläche der Ausgabeeinrichtung zu bilden. Vorzugsweise kann die Ausgabeeinrichtung Ausgabeflächen aufweisen, die beispielsweise quadratisch, rechteckig, winklig, vieleckig oder dergleichen ausgebildet sein können. Dadurch kann eine hohe Flexibilität hinsichtlich der Geometrie der Anzeigeeinrichtung erreicht werden, wobei zugleich aufgrund des modularen Aufbaus der Anzeigeeinrichtung aus Ausgabeeinheiten eine sehr kostengünstige Ausgabeeinrichtung bereitgestellt werden kann. Dabei benötigt die Anzeigeeinheit selbst im Wesentlichen keine eigene Datenverarbeitungselektronik, da lediglich der Speicherinhalt der Speichereinheit auszugeben ist.

Erfindungsgemäß ist die Rechnereinheit ausgebildet, um zu ermitteln, ob die angeschlossene Ausgabeeinheit für eine graphische und/oder alphanumerische visuelle Ausgabe ausgebildet ist. Auf diese Weise ist es möglich, die bereitzustellenden Daten hinsichtlich der Eignung für die Ausgabe auf einer Ausgabeeinheit zu selektieren. Beispielsweise kann hierdurch erreicht werden, dass eine graphische Ausgabe eines Bildes lediglich auf einer für graphische Ausgaben geeigneten Ausgabeeinheit ausgegeben wird, wohingegen eine Ausgabe eines Textes oder von Ziffern auf eine Ausgabeeinheit für eine alphanumerische visuelle Ausgabe geleitet werden kann. Dies ermöglicht es, automatisch bestimmte Dateninhalte entsprechend geeigneten Ausgabeeinheiten zuordnen zu können. So kann die Ausgabeeinrichtung beispielsweise auch eine Siebensegmentanzeige als Anzeigeinheit umfassen, die sich vorzugsweise für die Ausgabe alphanumerischer Zeichen eignet.. Die Rechnereinheit kann zu diesem Zweck ein geeignetes ablaufbares Programm aufweisen, welches die Daten in der erforderlichen Weise aufbereitet und über die Rechnerschnittstelle bereitstellt.

Weiterhin ist es vorteilhaft, wenn wenigstens eine der Ausgabeeinheiten eine Eingabefunktion bereitstellt. Beispielsweise kann dies erreicht werden, indem die Ausgabeeinheit Eingabeelemente für eine manuelle Eingabe des Nutzers bereitstellt. Besonders vorteilhaft erweist es sich, wenn die Eingabeeinheit zusammen mit der Ausgabeeinheit durch einen berührungssensitiven Bildschirm gebildet ist. Zu diesem Zweck kann vorgesehen sein, dass die Rechnereinheit zwischen auf den Datenleitungen zu übertragenden Datensätzen prüft, ob von der jeweiligen Ausgabeeinheit selbst Daten bereitgestellt werden. Diese Daten können entsprechenden Eingabefunktionen zugeordnet werden, die von der Rechnereinheit erfasst und einer weiteren Verarbeitung zugeführt werden können. Beispielsweise kann es sich hierbei um Steuerfunktionen für das Haushaltsgerät, Zustandsanzeigen oder dergleichen handeln.

Bevorzugt ist es ferner, wenn der Ausgabeeinheitssteueranschluss ein Anschluss sowohl bei der Rechnerschnittstelle als auch bei den Ausgabeeinheitsschnittstellen ist. Dadurch können bereits vorhandene Schnittstellen und Schnittstellenprotokolle genutzt werden, ohne zusätzlichen Entwicklungsaufwand bereitstellen zu müssen. Dieser Anschluss ist zum Anschließen an die Selektionseinheit vorgesehen. Dadurch kann auch auf einfache Weise eine elektrische Leitung zur Verbindung der Schnittstellen realisiert werden.

Darüber hinaus ist es vorteilhaft, wenn die Selektionseinheit einen Demultiplexer aufweist. Der Demultiplexer kann als fertiger Funktionsbaustein für eine Realisierung der Erfindung genutzt werden. Beispielsweise kann ein CMOS-Funktionsbaustein wie der 4067 oder dergleichen genutzt werden. Dadurch lässt sich die Selektionseinheit einfach und kostengünstig realisieren.

Ferner ist es günstig, wenn der Demultiplexer genau einen Eingangsanschluss zum Anschließen an den Ausgabeeinheitssteueranschluss der Rechnerschnittstelle und wenigstens eine Anzahl von Ausgangsanschlüssen zum Anschließen an die Ausgabeeinheitssteueranschlüsse der Ausgabeeinheitsschnittstellen. Vorzugsweise ist die Anzahl der Ausgangsanschlüsse an die Anzahl der Ausgabeeinheitssteueranschlüsse der Ausgabeeinheitsschnittstellen angepasst gewählt. Jedem der Ausgabeeinheitssteueranschlüsse der Ausgabeeinheitsschnittstellen ist demnach genau ein Ausgangsanschluss der Selektionseinheit zugeordnet. Dadurch kann auch eine Zuordnung des jeweiligen Selektionssignals vorgegeben sein.

Ein Haushaltsgerät gemäß der Erfindung weist einen mittels einer Tür verschließbaren Aufnahmeraum für einen Haushaltsgegenstand sowie eine Steuereinrichtung zum Betreiben des Haushaltsgeräts während eines bestimmungsgemäßen Gebrauchs und zum Betreiben einer mehr als zwei visuelle Ausgabeeinheiten aufweisenden Ausgabeeinrichtung auf. Das Haushaltsgerät weist eine erfindungsgemäße Schaltungsanordnung auf.

Ein Haushaltsgerät der gattungsgemäßen Art umfasst insbesondere ein Gerät zum Zubereiten von Lebensmitteln als Haushaltgegenstände, beispielsweise ein Kochfeld, ein Backofen, ein Mikrowellengerät, Kombinationen hiervon oder dergleichen, ein Gerät zur Pflege von Wäschestücken als Haushaltgegenstände, beispielsweise Behandeln von Wäschestücken, insbesondere eine Waschmaschine, ein Wäschetrockner, ein Bügelgerät, Kombinationen hiervon oder dergleichen, sowie ferner ein Gerät zum Reinigen, insbesondere Behandeln von Geschirr als Haushaltgegenstände, beispielsweise eine Geschirrspülmaschine oder dergleichen.

Das Haushaltsgerät weist vorzugsweise elektrische Einrichtungen auf, mittels denen die bestimmungsgemäße Funktion beziehungsweise Nutzung realisiert werden kann. Die elektrischen Einrichtungen können beispielsweise eine elektrische Maschine, eine elektrische Heizung, einen Umrichter, insbesondere einen Wechselrichter, Kombinationen hiervon oder dergleichen umfassen. Um die elektrischen Einrichtungen in bestimmungsgemäßer Weise steuern zu können, weist das Haushaltsgerät die elektronische Steuereinheit auf. Diese kann beispielsweise eine Eingabeeinheit aufweisen, über die ein Nutzer manuell Eingaben zur Steuerung des Haushaltsgeräts in gewünschter Weise vornehmen kann. Darüber hinaus kann die Steuereinheit eine Anzeigeeinrichtung als Ausgabeeinrichtung aufweisen, mittels der Betriebszustände für den Nutzer erkennbar angezeigt werden. Darüber hinaus kann natürlich auch eine Kombination der Anzeigeeinrichtung mit der Eingabeeinheit vorgesehen sein, beispielsweise in Form eines berührungssensitiven Bildschirms oder dergleichen. Schließlich kann die Steuereinheit auch Sensoren sowie deren Auswertung umfassen, um die elektrische Einrichtung gemäß einem Steuerprogramm zu steuern. Weiterhin kann die Steuereinheit auch programmgestützt sein und zu diesem Zweck insbesondere die Rechnereinheit aufweisen, so dass zum Beispiel unterschiedliche Betriebsabläufe ausgewählt werden können, beispielsweise durch eine Nutzereingabe oder auch in Abhängigkeit von erfassten Messwerten mittels der Sensoren. Schließlich kann die Steuereinheit auch zur Kommunikation mit haushaltsgeräteexternen Einrichtungen dienen, beispielsweise indem eine Kommunikationsverbindung zu einem Kommunikationsendgerät, insbesondere einem Mobilfunkendgerät hergestellt wird.

Ferner ist ein Verfahren zum Betreiben einer mehr als zwei visuelle Ausgabeeinheiten aufweisenden Ausgabeeinrichtung eines Haushaltsgeräts offenbart. Die Ausgabeeinheiten geben jeweils eine vollständige, anzuzeigende visuelle Ausgabe aufgrund von Daten einer Speichereinheit der Ausgabeeinheiten aus. Die Daten für die Ausgabe werden von einer bildverarbeitenden Rechnereinheit über eine digitale Rechnerschnittstelle und über eine jeweilige digitale Ausgabeeinheitsschnittstelle bereitgestellt. Die Daten werden parallel für die Ausgabeeinheiten über jeweilige Datenanschlüsse und einen separaten Ausgabeeinheitssteueranschluss bereitgestellt. In Abhängigkeit eines von der Rechnereinheit an einem Selektionsanschluss einer Selektionseinheit bereitgestellten Selektionssignals wird mittels der Selektionseinheit selektiv eine kommunikationstechnische Verbindung zwischen dem Ausgabeeinheitssteueranschluss der Rechnerschnittstelle und dem Ausgabeeinheitssteueranschluss einer der dem jeweiligen Selektionssignal zugeordneten Ausgabeeinheitsschnittstelle hergestellt.

Darüber hinaus ist es vorteilhaft, wenn die kommunikationstechnische Verbindung frühestens mit Beginn oder spätestens vor Beenden einer Übermittlung von einer Ausgabe durch eine einzelne Ausgabeeinheit zugeordneten auszugebenden Daten hergestellt wird. Dadurch ist möglich, bereits während des Übermittelns der Daten die zugehörige Ausgabeeinheit zu aktivieren, die Daten in ihre Speichereinheit zu übernehmen. Hierdurch kann eine Beschleunigung erreicht werden. Weiterhin können die anderen Ausgabeeinheiten währenddessen schnittstellenseitig deaktiviert werden, sodass Energie eingespart werden kann.

Insgesamt ermöglicht es die Erfindung, mit Hilfe der erfindungsgemäßen Schaltungsanordnung und gegebenenfalls entsprechend angepasster Steuerprogramme für die Rechnereinheit eine kostengünstige, quasi simultane Ansteuerung mehrerer Anzeigeeinheiten zu erreichen. Die Erfindung richtet sich dabei insbesondere an Anzeigeeinheiten, die einen eigenen Grafikspeicher (GRAM) aufweisen, in welchem einem aktuell anzuzeigenden beziehungsweise auszugebenden Bild entsprechende Daten gespeichert sind und andererseits eine einfache Schnittstelle zur Ansteuerung des Graphikspeichers aufweisen. Eine solche Schnittstelle kann beispielsweise durch einen Mikroprozessor wie Intel® 8080, Motorola® 6800 oder dergleichen zum Einsatz kommen.

Ein Grundprinzip der Erfindung sieht insbesondere vor, für die Ausgabe erforderliche Daten über einen großen Teil der Steuer- und Datenleitungen der, vorzugsweise einzigen, parallelen Kommunikationsverbindung im Multiplex an die Ausgabeeinheiten zu übertragen, wobei ergänzend lediglich über eine Selektionseinheit ein Ausgabeeinheitssteuersignal an die jeweilige Anzeigeeinheit übermittelt wird, an die die Daten beziehungsweise der Datensatz gerichtet sind. Ein entsprechendes Signal kann beispielsweise das CS-Signal sein. Die Selektionseinheit kann zum Zwecke des Übermittelns des Selektionssignals an einen General Purpose Input Output (GPIO)-Anschluss der Rechnereinheit angeschlossen sein. Ein solcher Anschluss ist entsprechend einer vorgesehenen Programmierung der Rechnereinheit nutzbar. Demzufolge umfasst ein entsprechend geeignetes Rechnerprogramm eine Steuerung dieses Anschlusses, um mittels des Selektionssignals die jeweilige Anzeigeeinheit auswählen zu können.

Die Erfindung ermöglicht es somit, aus einer Mehrzahl von kleinen Anzeigeeinheiten eine großflächige Anzeigeeinrichtung zu bilden, die im Wesentlichen beliebig hinsichtlich der Geometrie angepasst werden kann und zugleich mit geringem Steuerungsaufwand zuverlässig zur Darstellung gewünschter Inhalte eingerichtet werden kann. Der Einsatz von teuren dezidierten Display-Controllern, die sehr speziell und sehr teuer sind, kann im Wesentlichen vermieden werden. Darüber hinaus kann auch der kostenintensive Einsatz von RGB-Splittern vermieden werden.

Die Rechnerschnittstelle sowie die Ausgabeeinheitsschnittstelle können beispielsweise 16 Datenleitungen sowie vier Steuerleitungen umfassen. Vorzugsweise ist eine der Steuerleitungen für das Ausgabeeinheitssteuersignal am Ausgabeeinheitssteueranschluss gewählt. Diese Steuerleitung ist - wie oben ausgeführt - über die Selektionseinheit geführt. Die Signale sind vorzugsweise digitale, insbesondere binäre Signale. Eine Taktrate kann im Bereich von bis zu etwa 10 MHz liegen.

Die Erfindung ermöglicht es, die Ausgabeeinrichtung modular aus einer Vielzahl von Ausgabeeinheiten zusammenzustellen, insbesondere eröffnet sie die Möglichkeit, eine Anzeigeeinrichtung mosaikartig auszubilden.

Vorteilhafte Ausführungen der Schaltungsanordnung sind als vorteilhafte Ausführungen des Verfahrens anzusehen. Dazu sind gegenständliche Komponenten der Schaltungsanordnung alleine oder in Kombination ausgebildet, um die Verfahrensschritte zu ermöglichen.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in andren Kombinationen oder aber in Alleinstellung verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind.

Das Ausführungsbeispiel der Erfindung wird nachfolgend anhand einer schematischen Zeichnung näher erläutert. In den Figuren bezeichnen gleiche Bezugszeichen gleiche Funktionen und Merkmale.

Es zeigen:
- Fig. 1: eine Waschmaschine als Haushaltsgerät gemäß der Erfindung in einer schematisch geöffneten Frontansicht und
- Fig. 2: ein schematisches Blockschaltbild für eine Schaltungsanordnung gemäß der Erfindung.

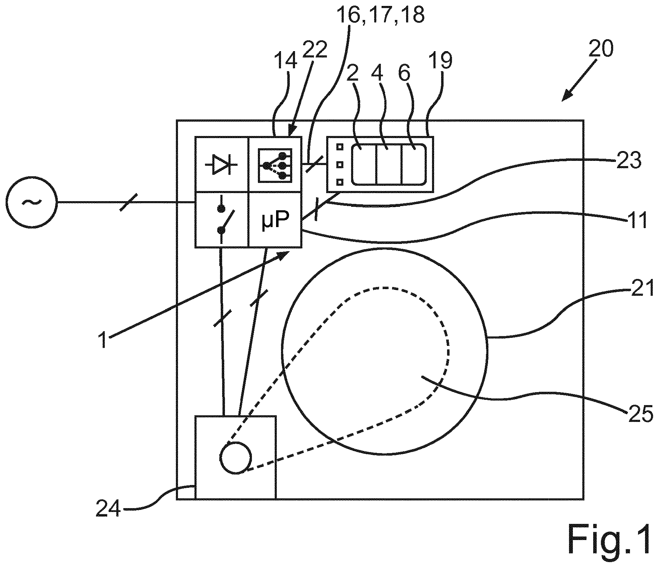

Fig. 1 zeigt eine Waschmaschine 20 als Haushaltsgerät in einer schematisch geöffneten Frontansicht. Die in Fig. 1 dargestellte Waschmaschine 20 weist eine drehbar gelagerte Waschmaschinentrommel 21 auf, die über einen nicht näher bezeichneten Treibriemen mittels einer Antriebseinheit 24 antreibbar ist. Die Antriebseinheit 24 ist über nicht näher bezeichnete Leitungen an eine Schalteinheit angeschlossen, die ihrerseits in nicht näher bezeichneter Weise an ein elektrisches Energieversorgungsnetz, hier das öffentliche Energieversorgungsnetz, angeschlossen ist. Zum Betrieb der Waschmaschine 20 stellt das öffentliche Energieversorgungsnetz die erforderliche elektrische Energie bereit. Nicht dargestellt ist ferner, dass die Antriebseinheit 24 einen Umrichter umfasst, mittels dem Drehzahlen und Drehmomente in gewünschter Weise eingestellt werden können.

Die Waschmaschinentrommel 21 stellt einen mittels einer nicht dargestellten Tür verschließbaren Aufnahmeraum 25 für zu reinigende Wäschestücke als Haushaltsgegenstände bereit. Darüber hinaus umfasst die Waschmaschine 20 eine Steuereinrichtung 22 zum Betreiben des Haushaltsgeräts 20 während eines bestimmungsgemäßen Gebrauchs, hier während eines Waschvorgangs. Weiterhin dient die Steuereinrichtung 22 zum Betreiben einer mehr als zwei visuelle Ausgabeeinheiten 2, 4, 6 aufweisenden Anzeigeeinrichtung 19 als Ausgabeeinrichtung. Die Anzeigeeinrichtung 19 ist vorliegend modular durch die Anzeigeeinheiten 2, 4, 6 gebildet.

Die Steuereinrichtung 22 weist eine Schaltungsanordnung 1 gemäß der Erfindung auf, die zum Betreiben der mehr als zwei visuelle Ausgabeeinheiten, hier die Anzeigeeinheiten 2, 4, 6, der Anzeigeeinrichtung 19 dient. Vorliegend sind die Anzeigeeinheiten 2, 4, 6 als TFT-Display ausgebildet.

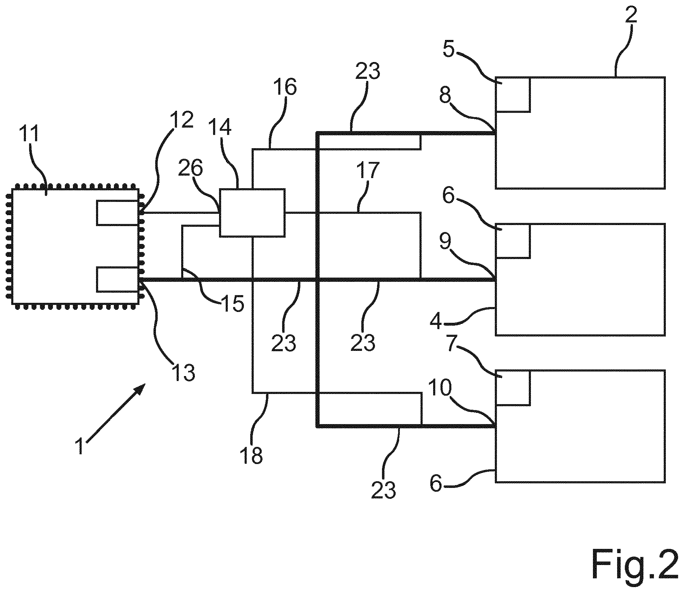

Fig. 2 zeigt die Schaltungsanordnung 1 in einer schematischen Blockschaltbildansicht. Aus Fig. 2 ist ersichtlich, dass jedes der TFT-Displays 2, 4, 6 jeweils eine eigene individuelle Speichereinheit 3, 5, 7 für eine vollständige, anzuzeigende visuelle Ausgabe aufweist. Die Speichereinheit 3, 5, 7 ist derart ausgelegt, dass sie Daten für eine durch das TFT-Display 2, 4, 6 auszugebende Ausgabe speichern kann. Beispielsweise sind dies Daten für ein Bild, welche Daten zu einem Datensatz zusammengefasst sind.

Die TFT-Displays 2, 4, 6 weisen ferner jeweils eigene Ausgabeeinheitsschnittstellen als TFT-Schnittstellen 8, 9, 10 auf.

Die Schaltungsanordnung 1 umfasst ferner eine bildverarbeitende Rechnereinheit 11, die hier durch einen ARM-Prozessor gebildet ist, der eine digitale Rechnerschnittstelle 13 aufweist. Sowohl die Rechnerschnittstelle 13 als auch die TFT-Schnittstellen als Ausgabeeinheitsschnittstellen 8, 9, 10 umfassen jeweils parallele Datenanschlüsse 23 und einen separaten Ausgabeeinheitssteueranschluss 15, 16, 17, 18. Die Datenanschlüsse 23 der TFT-Schnittstellen 8, 9, 10 sind jeweils parallel an den Datenanschluss der Rechnerschnittstelle 13 angeschlossen.

Erfindungsgemäß umfasst die Schaltungsanordnung 1 eine Selektionseinheit 14, die hier als Demultiplexer ausgebildet ist. Der Demultiplexer 14 umfasst einen Selektionsanschluss 26, der an einen General-Purpose-Input-Output (GPIO)-Port der Rechnereinheit 11 angeschlossen ist. An den Demultiplexer 14 sind die Ausgabeeinheitssteueranschlüsse 15, 16, 17, 18 sowohl der Rechnerschnittstelle 13 als auch der TFT-Schnittstellen 8, 9, 10 der TFT-Displays 2, 4, 6 angeschlossen.

Der Demultiplexer 14 ist eingerichtet, in Abhängigkeit eines von der Rechnereinheit 11 am Selektionsanschluss 26 bereitgestellten Selektionssignals selektiv eine kommunikationstechnische Verbindung zwischen dem Ausgabeeinheitssteueranschluss 15 der Rechnerschnittstelle 13 und dem Ausgabeeinheitssteueranschluss 16, 17, 18 einer der dem jeweiligen Selektionssignal zugeordneten Ausgabeeinheitsschnittstelle 8, 9, 10 herzustellen. Das Selektionssignal ist hier individuell eindeutig dem jeweiligen TFT-Display 2, 4, 6 zugeordnet.

Die TFT-Displays 2, 4, 6 bilden in modularer Weise die Anzeigeeinrichtung 19 und sind sowohl für ein graphische als auch für eine alphanumerische visuelle Ausgabe beziehungsweise Anzeige von Inhalten ausgebildet.

Mittels eines geeigneten Steuerprogramms ist die Rechnereinheit 11 ausgebildet, Daten für Einzelausgaben der jeweiligen TFT-Displays 2, 4, 6 aus einer für sämtliche TFT-Displays 2, 4, 6 gemeinsamen visuellen Ausgabe zu ermitteln und die jeweiligen Daten, insbesondere zusammengestellt in Form von Datensätzen, an die entsprechend zugeordneten TFT-Displays 2, 4, 6 über die Datenleitungen 23 zu übermitteln.

Auf diese Weise werden Datensätze für die einzelnen TFT-Displays 2, 4, 6 an sämtliche TFT-Displays 2, 4, 6 gemeinsam übertragen. Lediglich durch das durch den Demultiplexer 14 bereitgestellte Selektionssignal für die dem Selektionssignal individuell zugeordnete TFT-Schnittstelle 8, 9, 10 wird erreicht, dass die an die TFT-Displays 2, 4, 6 übertragenen Datensätze nur von dem zugehörigen TFT-Display 2, 4, 6 in deren Speichereinheit 3, 5, 7 übernommen und ausgegeben, das heißt, hier zur Anzeige gebracht werden.

Dadurch kann die Anzeigeeinrichtung 19 aus einer Vielzahl von TFT-Displays 2, 4, 6 gebildet sein, wobei nahezu beliebige geometrische Abmessungen der Anzeigeeinrichtung 19 erreicht werden können. Zugleich kann durch Serienherstellung der TFT-Displays 2, 4, 6 eine kostengünstige Herstellung der Anzeigeeinrichtung 19 erreicht werden. Flexibilität kann insbesondere auch dadurch erhöht werden, dass durch Anpassung eines Rechnerprogramms eine vorhandene Grundstruktur der Anzeigeeinrichtung 19 angepasst werden kann. Dadurch kann die Anzeigeeinrichtung 19 leicht für einen Einsatz bei unterschiedlichsten Haushaltsgeräten angepasst werden.

Das zuvor beschriebene Ausführungsbeispiel dient lediglich der Erläuterung der Erfindung und ist für diese nicht beschränkend. So können natürlich Funktionen, insbesondere elektronische Bauteile, die Struktur der Schaltungsanordnung und dergleichen beliebig gestaltet sein innerhalb des Schutzumfangs, der durch die Ansprüche definiert ist.

Die für die erfindungsgemäße Schaltungsanordnung beschriebenen Vorteile und Merkmale sowie Ausführungsformen gelten gleichermaßen für das erfindungsgemäße Verfahren und umgekehrt. Folglich können für Vorrichtungsmerkmale entsprechende Verfahrensmerkmale und umgekehrt vorgesehen sein.

### Bezugszeichenliste

- 1: Schaltungsanordnung
- 2: TFT-Display
- 3: Speichereinheit
- 4: TFT-Display
- 5: Speichereinheit
- 6: TFT-Display
- 7: Speichereinheit
- 8: TFT-Schnittstelle
- 9: TFT-Schnittstelle
- 10: TFT-Schnittstelle
- 11: ARM-Prozessor
- 12: GPIO-Port
- 13: Prozessorschnittstelle
- 14: Demultiplexer
- 15: Leitung für CS-Signal
- 16: Anzeigeeinheitssteueranschluss
- 17: Anzeigeeinheitssteueranschluss
- 18: Anzeigeeinheitssteueranschluss
- 19: Anzeigeeinrichtung
- 20: Waschmaschine
- 21: Waschmaschinentrommel
- 22: Steuereinrichtung
- 23: Datenleitung
- 24: Antriebseinheit
- 25: Aufnahmeraum
- 26: Selektionsanschluss

## Patentansprüche

1. Haushaltsgerät (20) mit einer Schaltungsanordnung (1), einer Ausgabeeinrichtung (19) und weiter mit einem mittels einer Tür verschließbaren Aufnahmeraum (25) für einen Haushaltsgegenstand sowie einer Steuereinrichtung (22) zum Betreiben des Haushaltsgeräts (20) während eines bestimmungsgemäßen Gebrauchs und zum Betreiben der mehr als zwei visuelle Ausgabeeinheiten (2, 4, 6) aufweisenden Ausgabeeinrichtung (19) des Haushaltsgeräts (20) mittels der Schaltungsanordnung (1) zum Betreiben der mehr als zwei visuelle Ausgabeeinheiten (2, 4, 6) aufweisenden Ausgabeeinrichtung (19) des Haushaltsgeräts (20), wobei die Ausgabeeinheiten (2, 4, 6) jeweils eine Speichereinheit (3, 5, 7) für eine vollständige, anzuzeigende visuelle Ausgabe und eine digitale Ausgabeeinheitsschnittstelle (8, 9, 10) aufweisen, wobei die Schaltungsanordnung (1) eine bildverarbeitende Rechnereinheit (11) mit einer digitalen Rechnerschnittstelle (13) aufweist, wobei sowohl die Rechnerschnittstelle (13) als auch die Ausgabeeinheitsschnittstellen (8, 9, 10) jeweils parallele Datenanschlüsse (23) und einen separaten Ausgabeeinheitssteueranschluss (15, 16, 17, 18) umfassen, wobei die Datenanschlüsse (23) der Ausgabeeinheitsschnittstellen (8, 9, 10) jeweils parallel an den Datenanschlüssen (23) der Rechnerschnittstelle (13) angeschlossen sind, ferner umfassend eine Selektionseinheit (14), die einen Selektionsanschluss (26) aufweist, der an die Rechnereinheit (11) angeschlossen ist, wobei an die Selektionseinheit (14) die Ausgabeeinheitssteueranschlüsse (15, 16, 17, 18) sowohl der Rechnerschnittstelle (13) als auch der Ausgabeeinheitsschnittstellen (8, 9, 10) angeschlossen sind, wobei die Selektionseinheit (14) eingerichtet ist, in Abhängigkeit eines von der Rechnereinheit (11) am Selektionsanschluss (26) bereitgestellten Selektionssignals selektiv eine kommunikationstechnische Verbindung zwischen dem Ausgabeeinheitssteueranschluss (15) der Rechnerschnittstelle (13) und dem Ausgabeeinheitssteueranschluss (16, 17, 18) einer der dem jeweiligen Selektionssignal zugeordneten Ausgabeeinheitsschnittstelle (8, 9, 10) herzustellen,
wobei die Ausgabeeinheiten (2, 4, 6) durch jeweils ein TFT-Display gebildet sind, und die Rechnereinheit (11) ausgebildet ist, Daten für Einzelausgaben für die jeweiligen Ausgabeeinheiten (2, 4, 6) aus einer für sämtliche Ausgabeeinheiten (2, 4, 6) gemeinsamen visuellen Ausgabe zu ermitteln und die jeweiligen Daten an die entsprechend zugeordneten Ausgabeeinheiten (2, 4, 6) zu übermitteln, wobei
die Ausgabeeinheit (2, 4, 6) für eine graphische und/oder alphanumerische visuelle Ausgabe ausgebildet ist, und wobei
die Rechnereinheit (11) ausgebildet ist, zu ermitteln, ob die angeschlossene Ausgabeeinheit (2, 4, 6) für eine graphische und/oder alphanumerische visuelle Ausgabe ausgebildet ist.

2. Haushaltsgerät (20) nach dem vorhergehenden Anspruch 1, wobei wenigstens eine der Ausgabeeinheiten (2, 4, 6) eine Eingabefunktion bereitstellt.

3. Haushaltsgerät (20) nach einem der vorhergehenden Ansprüche, wobei die Selektionseinheit (14) einen Demultiplexer aufweist

4. Haushaltsgerät (20) nach Anspruch 3, wobei der Demultiplexer (14) genau einen Eingangsanschluss zum Anschließen an den Ausgabeeinheitssteueranschluss (15) der Rechnerschnittstelle (13) und wenigstens eine Anzahl von Ausgangsanschlüssen zum Anschließen an die Ausgabeeinheitssteueranschlüsse (16, 17, 18) der Ausgabeeinheitsschnittstellen (8, 9, 10) aufweist.

## Claims

1. Household appliance (20) with a circuit arrangement (1), an output facility (19) and further with a receiving compartment (25), which can be closed by means of a door, for a household object as well as a control facility (22) for operating the household appliance (20) during normal use and for operating the output facility (19) of the household appliance (20) having more than two visual output units (2, 4, 6), by means of the circuit arrangement (1) for operating the output facility (19) of the household appliance (20) having more than two visual output units (2, 4, 6), wherein the output units (2, 4, 6) have in each case a storage unit (3, 5, 7) for a complete visual output to be displayed and a digital output unit interface (8, 9, 10), wherein the circuit arrangement (1) has an image-processing computer unit (11) with a digital computer interface (13), wherein both the computer interface (13) and also the output unit interfaces (8, 9, 10) comprise in each case parallel data connections (23) and a separate output unit control connection (15, 16, 17, 18), wherein the data connections (23) of the output unit interfaces (8, 9, 10) are connected in each case in parallel to the data connections (23) of the computer interface (13),
further comprising a selection unit (14), which has a selection connection (26), which is connected to the computer unit (11), wherein the output unit control connections (15, 16, 17, 18) of both the computer interface (13) and also the output unit interfaces (8, 9, 10) are connected to the selection unit (14), wherein the selection unit (14) is designed to establish a connection via communication technology between the output unit control connection (15) of the computer interface (13) and the output unit control connection (16, 17, 18) of an output unit interface (8, 9, 10) assigned to the respective selection signal as a function of a selection signal provided by the computer unit (11) at the selection connection (26),
wherein the output units (2, 4, 6) are formed by a TFT display in each case, and the computer unit (11) is embodied to determine data for individual outputs for the respective output units (2, 4, 6) from a visual output shared by all output units (2, 4, 6) and to transmit the respective data to the correspondingly assigned output units (2, 4, 6), wherein
the output unit (2, 4, 6) is embodied for a graphical and/or alphanumerical visual output and wherein
the computer unit (11) is embodied to determine whether the connected output unit (2, 4, 6) is embodied for a graphical and/or alphanumerical visual output.

2. Household appliance (20) according to the preceding claim 1, wherein at least one of the output units (2, 4, 6) provides an input function.

3. Household appliance (20) according to one of the preceding claims, wherein the selection unit (14) has a demultiplexer.

4. Household appliance (20) according to claim 3, wherein the demultiplexer (14) has precisely one input connection for connection to the output unit control connection (15) of the computer interface (13) and at least a number of output connections for connection to the output unit control connections (16, 17, 18) of the output unit interfaces (8, 9, 10).

## Revendications

1. Appareil ménager (20) comprenant un agencement de circuit (1), un dispositif de sortie (19) et en outre un espace de logement (25) pouvant être fermé au moyen d'une porte, pour un objet ménager, ainsi qu'un dispositif de commande (22) destiné au fonctionnement de l'appareil ménager (20) pendant une utilisation conforme à l'emploi et destiné au fonctionnement du dispositif de sortie (19) de l'appareil ménager (20), présentant plus de deux unités de sortie visuelles (2, 4, 6) au moyen de l'agencement de circuit (1) pour le fonctionnement du dispositif de sortie (19) de l'appareil ménager (20) présentant plus de deux unités de sortie visuelles (2, 4, 6), dans lequel les unités de sortie (2, 4, 6) présentent respectivement une unité de mémorisation (3, 5, 7) pour une sortie visuelle complète à afficher, et une interface numérique d'unité de sortie (8, 9, 10), dans lequel l'agencement de circuit (1) présente une unité d'ordinateur (11) de traitement d'image dotée d'une interface d'ordinateur numérique (13), dans lequel aussi bien l'interface d'ordinateur (13) que les interfaces d'unité de sortie (8, 9, 10) comprennent des ports de données (23) respectivement parallèles et un port de commande d'unité de sortie (15, 16, 17, 18) séparé, dans lequel les ports de données (23) des interfaces d'unité de sortie (8, 9, 10) sont respectivement raccordés parallèlement aux ports de données (23) de l'interface d'ordinateur (13), comprenant en outre une unité de sélection (14) qui présente un port de sélection (26) qui est raccordé à l'unité d'ordinateur (11), dans lequel les ports de commande d'unité de sortie (15, 16, 17, 18) aussi bien de l'interface d'ordinateur (13) que des interfaces d'unité de sortie (8, 9, 10) sont raccordés à l'unité de sélection (14), dans lequel l'unité de sélection (14) est configurée, en fonction d'un signal de sélection fourni par l'unité d'ordinateur (11) sur le port de sélection (26), pour sélectivement établir une liaison au niveau de la technique de communication, entre le port de commande d'unité de sortie (15) de l'interface d'ordinateur (13) et le port de commande d'unité de sortie (16, 17, 18) d'une interface d'unité de sortie (8, 9, 10) associée au signal de sélection respectif,
dans lequel les unités de sortie (2, 4, 6) sont formées par respectivement un écran TFT, et dans lequel l'unité d'ordinateur (11) est réalisée pour déterminer des données pour des sorties individuelles pour les unités de sortie respectives (2, 4, 6) à partir d'une sortie visuelle commune pour toutes les unités de sortie (2, 4, 6), et pour transmettre les données respectives aux unités de sortie (2, 4, 6) associées de manière correspondante, dans lequel
l'unité de sortie (2, 4, 6) est réalisée pour une sortie visuelle graphique et/ou alphanumérique, et dans lequel
l'unité d'ordinateur (11) est réalisée pour déterminer si l'unité de sortie (2, 4, 6) raccordée est réalisée pour une sortie visuelle graphique et/ou alphanumérique.

2. Appareil ménager (20) selon la revendication précédente 1, dans lequel au moins une des unités de sortie fournit au moins une fonction d'entrée.

3. Appareil ménager (20) selon l'une quelconque des revendications précédentes, dans lequel l'unité de sélection (14) présente un démultiplexeur.

4. Appareil ménager (20) selon la revendication 3, dans lequel le démultiplexeur (14) présente exactement un port d'entrée pour le raccordement au port de commande d'unité de sortie (15) de l'interface d'ordinateur (13), et au moins un nombre de ports de sortie pour le raccordement aux ports de commande d'unité de sortie (16, 17, 18) des interfaces d'unité de sortie (8, 9, 10).
